# EUROPEAN PATENT SPECIFICATION

(11) **EP 1 571 374 B1**
(45) Date of publication and mention of the grant of the patent: **15.07.2009**
(21) Application number: 04004619.5
(22) Date of filing: 01.03.2004
(51) Int. Cl.: F16H 59/04, B60K 20/04

(54) **Gear shift mechanism for a manual motor vehicle transmission**
Schaltmechanismus für manuelles Schaltgetriebe
Mécanisme de passage de vitesses pour boîte de vitesses manuelle

(43) Date of publication of application: 07.09.2005
(73) Proprietor: Ford Global Technologies, LLC, Dearborn, MI 48126 (US)
(72) Inventor: Hansson, Lars, 424 68 Angered (SE)
(74) Representative: Börlin, Maria

(56) References cited:
- EP-A- 0 333 429
- EP-A- 0 575 861
- DE-A- 442 806
- DE-A- 3 116 833
- DE-A- 4 428 205
- JP-A- 57 209 426
- US-A- 2 369 690
- US-A- 4 912 997
- US-A- 5 845 536

## Description

The present invention relates to a gear shift mechanism for a manual transmission, comprising a mounting bracket adapted to be mounted stationary inside a motor vehicle, a gear shift lever pivotally mounted in said bracket for selective pivotal movement about a first pivot axis from a neutral position to a plurality of gear speed positions and for pivotal movement in the neutral position about a second axis perpendicular to said first axis for range selection, first motion transmitting means for transmitting pivotal movement of the gear shift lever about said first axis to first flexible cable means and second motion transmitting means for transmitting pivotal movement of the gear shift lever about said second axis to second flexible cable means.

Usually in prior art gear shift mechanisms of this typ the mounting bracket of the gear shift lever is mounted in a console between the driver's seat and the passenger's front seat. Pivotal movement of the gear shift lever is transmitted via motion transmitting means supported by the bracket and flexible cable means to shift forks in the housing of the transmission. Generally pivotal movement about said first axis, which means fore-aft pivotal movement relative to the longitudinal axis of the vehicle, will select between two gear ratios, for example first or second gear speed, while pivotal movement about said second axis, i. e. transverse pivotal movement, will select between gates or ranges, for example 1-2, 3-4 or 5-R.

Document JP-A-57 209426 discloses a remote control mechanism of a speed change device for automobiles. Action of a change-lever is transmitted to a gear box via a push-pull cable. A guide slot is arranged for leadeing the the change-lever in a bracket at the bottom of the lever, so that uncertain shifting of the change-lever may be cleared off for better stiff feeling.

Document DE-A1-442 8206 discloses a gear shift mechanism which is connected to the gear change mechanism by rods or cables according to the preamble of claim 1. The operating force for the gear lever is controlled by a resistance mechanism. The gear lever is spring-loaded into a neutral position but is kept in the selected position by a cam surface means.

Generally inside the transmission housing there are mechanisms such as springs and detent devices, which respond to movement of the cables for providing shift feel or feedback to the driver, and coulisse devices to ensure that a presently engaged gear will be disengaged before a subsequently selected gear can be engaged. The efficiency of the cable means affects the shift feel and the level of feed back to the driver. The effect of cable efficiency can vary between systems or between installations of the same system. This can result in that the driver puts in less force than needed when a sense of shift completion is not fully recognized by the feedback the driver receives.

It is an object of the present invention to provide an improved gear shift mechanism for a manual motor vehicle transmission wherein shift feel or feedback to the driver is not affected by variations of cable efficiency.

This is achieved according to the present invention by providing a gear shift mechanism according to claim 1..

By removing the detent and coulisse devices from the shift mechanism in the transmission housing and replacing them with devices having the corresponding functions but instead integrated in the gear shift mechanism inside the passenger compartment of the vehicle several advantages can be obtained. First of all the shifting quality can be improved since variations of the efficiency between various the cable systems will have no significant influence on shift feel or driver feedback. The overall cost of the gear shift mechanism can be reduced. The mechanism will be easy to install and it will be readily accessible for adjustment or repair.

The gear shift mechanism according to the present invention will be described in more detail with reference to the accompanying drawing, wherein
Fig. 1 is a schematic side elevational view of one embodiment of a gear shift mechanism incorporating the present invention,
Fig. 2 is a cross-section of the gear shift mechanism shown in Fig. 1 and
Fig. 3 is a schematic top elevational view of the mounting bracket of the gear shift mechanism shown in Fig. 1 and Fig. 2.

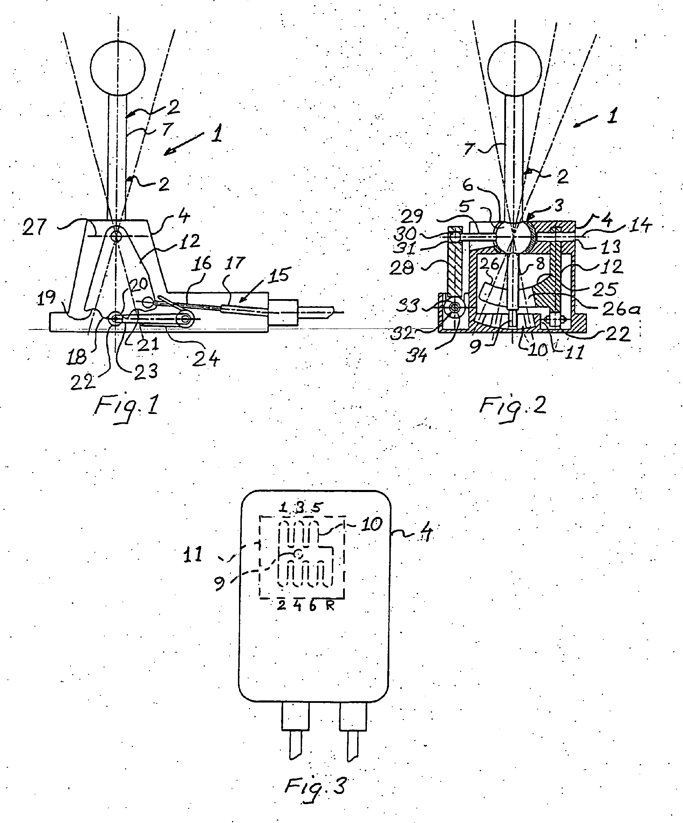

Referring to the drawing there is shown in Figs. 1 and 2 a gear shift mechanism 1, comprising a manual gear shift lever 2 which is pivotally mounted in a ball and socket arrangement 3 on a mounting bracket 4 adapted to be mounted adjacent to a driver seat in a motor vehicle. The ball and socket arrangement 3 includes a ball portion 5 rigidly attached to the shift lever 2 and a socket or bearing portion 6 secured with the bracket 4. The shift lever 2 has an upper portion 7 extending upward from the ball portion 5 and a lower portion 8 extending downward from the ball portion 5. The lower lever portion 8 has an end portion 9 which projects into a gate system 10 of a guide plate 11 which is secured with the mounting bracket 4.

An arm 12 is journalled by means of a pin 13 in the bracket 4 for pivotal movement about a first pivot axis 14 in a fore-aft direction of the vehicle. A flexible control cable 15 including an inner wire 16 and an outer tubular cover 17 has an end portion of the wire 16 connected to the arm 12 and an end portion of tubular cover secured with the mounting bracket 4. A lower end surface of the arm 12 forms a cam surface 18 with three consecutive depressions 19, 20 and 21, the depression 20 defining a neutral postion of the gear shift lever in which no gear is engaged while the depressions 19 and 21 define positions of the gear shift lever in which a gear is engaged.

A cam follower in the form of a roller 22 is rotatably journalled on a support arm 23 which is pivotally journalled in the bracket 4 opposite the cam surface 18. The roller 22 is biased toward the cam surface 18 by means of a spring 24 mounted between the mounting bracket 4 and the support arm 23 for biasing the roller into one of the depressions representing the selected the gear shift position, thereby providing a direct shift feel or feedback to the driver.

A fork like guide member 25 having two legs 26 (only one shown in the cross-section of Fig. 2) oriented parallel with the first pivot axis 14 is rigidly attached to the arm 12. The legs 26 define between them an elongated slot 26a in which the lower portion 8 of the gear shift lever 2 is held in such a manner that pivotal movement of the gear shift lever about a second pivot axis 27 perpendicular to the first pivot axis 14 for range selection is permitted, in the neutral position of the gear shift lever 8, without changing the position of the arm 12 in the fore-aft direction.

During pivotal movement of the gear shift lever 2, firstly about the second pivot axis 27 for selection of one of the gear speed ranges 1-2, 3-4, 5-6 or Reverse (Fig. 3), and secondly about the first pivot axis 14 for selection of a gear speed (gear ratio), the end portion 9 of the gear shift lever 2 is guided by the gate system 10 of the guide plate or coulisse 11.

Pivotal movement of the gear shift lever 2 about the second pivot axes 27 is tranferred to a link arm 28 journalled in the bracket 4 for pivotal movement parallel with the arm 12 by means of a pin 29 rigidly attached to the ball portion 5 of the gear shift lever 2 and having an outer ball portion 30 projecting into an opening 31 in the link arm 28. The ball portion 30 and the opening 31 are, in a well known not shown manner, located off-set from the link arm pivot axis in order to transfer pivotal movement of the gear shift lever 2 about the first pivot axis 14 to pivotal movement of the link arm 28 about a pivot axis parallel with the first pivot axis 14. A flexible control cable 32 including an inner wire 33 and an outer tubular cover 34 has an end portion of the wire 33 connected to the link arm 28 and an end portion of the cover 34 secured with the mounting bracket 4.

The gear shift lever 2 is spring biased in a well known manner by spring means, not shown, such that, when the gear shift lever is released by the driver in the neutral position, the gear lever will be held in the neutral position of the gate portion of the gate system 10 between gear speeds 3 and 4, as shown in Fig. 3.

The invention has been described above with reference to a preferred embodiment having an arm 12 with a cam surface co-operating with a cam follower 22 on a pivotable support arm 23. An alternative embodiment within the scope of the invention could have cam means with a cam surface secured with the bracket 4 and a co-operating cam follower with spring means supported on an arm similar to the arm 12.

## Claims

1. A gear shift mechanism for a manual transmission, comprising a mounting bracket (4) adapted to be mounted stationary inside a motor vehicle, a gear shift lever (2) pivotally mounted in said bracket for selective pivotal movement about a first axis (14) from a neutral position to one of a plurality of ratio positions and for pivotal movement in the neutral position about a second axis (27) perpendicular to said first axis for range selection, first motion transmitting means (12) for transmitting pivotal movement of the gear shift lever about said first axist to first flexible cable means (15) and second motion transmitting means (28) for transmitting pivotal movement of the gear shift lever about said second axis to second flexible cable means (32), said first motion transmitting means (12) co-operates with cam surface means (18) defining a neutral gear shift lever position (20) and one gear speed position (19, 21) on either side of the neutral position and cam follower means (22) spring biased towards said cam surface for spring biasing the gear shift lever (2) towards a selected one of said positions, one of said cam surface means and said cam follower means being connected to the gear shift lever (2) for pivotal movement with the lever, the other one being stationary, **characterized in that** a lower portion (8) of the gear shift lever below said pivot axes (14, 27) projects into a gate system (10) of a stationary guide plate (11), said gate system having a pattern defining the shifting pattern of the gear lever during pivotal movement about said first and second pivot axes, and **in that** said first motion transmitting means comprises a pivot arm (12) having one end portion journalled in said bracket (4) and an opposite end portion attached to said flexible cable means (15), said lower portion (8) of the gear shift lever (2) being arranged to pivot the pivot arm during pivotal movement of the gear shift lever about said first axis (14) and to leave the pivot arm stationary during pivotal movement of the gear shift lever about said second axis (27).

2. A gear shift mechanism according to claim 1, **characterized in that** a guide member (25) oriented parallel with the first pivot axis (14) is rigidly attached to the pivot arm (12) at a location between said end portions, said guide member being provided with an elongated slot (26a) or opening, through which said lower portion (8) of the gear shift lever (2) runs, said slot or opening permitting pivotal movement of the gear shift lever about the second axis (27) without moving the pivot arm.

3. A gear shift mechanism according to claim 2, **characterized in that** an end surface of the pivot arm (12) remote from the pivot axis (14) of the pivot arm forms a cam surface (18) with three consecutive depressions (19, 20, 21), the middle one (20) representing the neutral position of the gear shift lever and the two ones (19, 21) on either side gear speed positions.

4. A gear shift mechanism according to claim 3, **characterized in that** a cam follower (22) is mounted on a support arm (23) which is pivotably journalled in said bracket (4) opposite the cam surface (18) and co-operates with spring means (24) biasing the support arm in a direction towards the cam surface.

5. A gear shift mechanism according to one of claims 1-4, **characterized in that** said guide plate (11) is secured with said bracket (4) and that an end portion (9) of said lower portion (8) of the gear shift lever (2) projects into said gate system (10).

## Patentansprüche

1. Ein Gangschaltungsmechanismus für manuelle Gangschaltung, umfassend:
einen Befestigungsteil (4), das angepasst ist, um innerhalb eines Fahrzeugs befestigt zu werden, einen im Befestigungsteil drehbar befestigten Schalthebel (2) für selektive Drehbewegung um eine erste Axel (14) von einer neutralen Position zu einer Mehrzahl von Übersetzungspositionen und für Drehbewegung in der neutralen Position um eine zweite Axel (27), die senkrecht zur besagten ersten Axel zur Weitenbestimmung steht, wobei der Gangschaltmechanismus weiter erste Bewegungsübersetzungsmittel (28) zur Übersetzung der Drehbewegung des Schalthebels um die besagte erste Axel zu ersten biegsamen Kabelmitteln (15) und zweite Bewegungsübersetzungsmittel (28) zur Übersetzung der Drehbewegung des Schalthebels um die besagte zweite Axel zu zweiten biegsamen Kabelmitteln (32) umfasst, wobei die besagten ersten Bewegungsübersetzungsmittel (12) mit Nockenflächenmitteln (18) zusammenwirken und dabei eine neutrale Schalthebelposition (20) und eine Gangposition (19,21) auf beiden Seiten der neutralen Schalthebelposition definieren und Nockenmitnehmer (22) zur Federbelastung des Schalthebels (2) in einer aus den besagten Positionen gewählte Position umfassen, die federbelastet zur besagten ersten Nockenfläche sind, wobei eine der besagten Nockenflächenmitteln und die besagten Kammfolgermittel an den Schalthebel (2) zur Drehbewegung mit dem Hebel angeschlossen sind, wobei eines der Mittel stationär ist,
**gekennzeichnet dadurch**
**dass** ein unterer Teil (8) des Schalthebels (8) unter den besagten Drehaxeln (14, 27) sich in ein Schützensystem (10) einer stationären Bewegungsplatte (11) hineinstreckt, wobei das besagte Schützensystem ein Muster hat, welches das Schaltmuster des Schalthebels während seiner Drehbewegung um die besagten ersten und zweiten Drehaxeln aufweist, und **dadurch**, dass die besagten ersten Bewegungssetzungsmittel einen Schwenkarm (12) aufweisen, der einen Endbereich umfasst, welche in dem besagten Befestigungsteil (4) ausgeführt ist und einen gegenüberliegenden Endbereich aufweist, der an die biegsamen Kabelmittel (15) angeschlossen sind, wobei der besagte untere Bereich (8) des Schalthebels (2) angepasst ist, um den Dreharm während der Drehbewegung des Schalthebels um die besagte erste Axel (14) zu bewegen und um den Dreharm während der Drehbewegung des Schalthebels um die besagte zweite Axel (27) stationär zu halten.

2. Ein Gangschaltungsmechanismus gemäß Anspruch 1, **gekennzeichnet dadurch, dass** Führungsmittel (25), die parallel zur ersten Drehaxel (14) orientiert sind, fest an den Dreharm (12) in einer Position zwischen den besagten Endbereichen befestigt sind, wobei die besagten Führungsmittel mit einem länglichen Schlitz (26a) oder einer Öffnung versehen sind, durch welche der besagte untere Bereich (8) des Schalthebels (2) verläuft, wobei der besagte Schlitz oder die besagte Öffnung eine Drehbewegung des Schalthebels um die zweite Axel (27) ohne eine Bewegung des Dreharmes erlaubt.

3. Ein Gangschaltungsmechanismus gemäß Anspruch 2, **gekennzeichnet dadurch, dass** eine Endfläche des Schwenkarmes (12), die fern von der Drehaxel (14) des Schwenkarmes eine Nockenfläche (18) mit drei aufeinander folgenden Vertiefungen (19, 20, 21) bildet, wobei die mittlere Vertiefung (20) die neutrale Position des Schalthebels bildet und die zwei anderen (19, 21) auf beiden Seiten der neutralen Position Gänge repräsentieren.

4. Ein Gangschaltungsmechanismus gemäß Anspruch 3, **gekennzeichnet dadurch dass** ein Nockenmitnehmer (22) an einem Stützarm (23) befestigt ist, welcher drehbar im besagten Befestigungsteil (4) gegenüber der Nockenfläche (18) angebracht ist und welcher mit Federmitteln (24) zusammenwirkt, welche den Stützarm in Richtung der Nockenfläche belasten.

5. Ein Gangschaltmechanismus gemäß einen der Ansprüche 1-4, **gekennzeichnet dadurch dass** die besagte Führungsplatte (11) mit dem besagten Befestigungsteil (4) zusammenkoppelt ist und **dadurch**, dass ein Endbereich (9) des unteren Bereichs (8) des Schalthebels (2) sich in das besagte Schützensystem (10) streckt.

## Revendications

1. Mécanisme de changement de vitesse pour transmission manuelle, comprenant un support de montage (4) adapté à être monté fix dedans un véhicule automobile, un levier de changement de vitesse (2) monté à pivot dans le dit support pour mouvement pivotal sélectif au tour d'un premier axe (14) d'une position neutre à une d'un pluralité de positions de rapports et pour le mouvement de pivot dans la position neutre au tour d'un deuxième axe (27) perpendiculaire au dit premier axe pour sélection de plage, un premier moyen de transmission de mouvement (12) pour transmission de mouvement de pivot du levier de changement de vitesse autour le dit axe premier à un premier moyen de câble flexible (15) et un deuxième moyen de transmission de mouvement (28) pour transmission de mouvement de pivot du levier de changement de vitesse autour le dit axe deuxième à un deuxième moyen de câble flexible (32) le dit premier moyen de transmission de mouvement (12) coopère avec de moyenne de surface de came (18) définissant une position neutre de levier de changement de vitesse (20) et une position de dent de vitesse (19, 21) dans les deux côtés de la position neutre et moyen de suivie de came (22) à influence de ressort vers la dite surface de came pour influence à ressort du levier de changement de vitesse (2) vers une position choisie d'une des dites positions, une de celles-ci moyennes de surface de came et la dite moyenne de suivie de came sont connectées au levier de changement de vitesse (2) pour mouvement pivoté avec le levier, l'autre étant immobile, **caractérisé en ce que** une partie inférieure (8) du levier de changement de vitesse au-dessous des dites axes de pivot (14, 27) saillis dedans une système de porte (10) d'une plaque de guide immobile (11), la dite système de porte a une forme définissant la forme d'enclenchement du levier de changement de vitesse pendant mouvement de pivot atour les dits axe premier et axe deuxième de pivot, et que la dite premier moyenne de transmission de mouvement comprends un bras de pivot (12) avec une partie de bout qui est logé dans le dit support de montage (4) et une partie de bout opposé attachée au dit moyenne de câble flexible (15), la dite partie inférieure (8) du levier de changement de vitesse (2) étant arrangée à pivoter le bras de pivot pendant mouvement de pivot du levier de changement de vitesse autour du dit premier axe (14) et de laisser le bras de pivot immobile pendant mouvement de pivot du levier de changement de vitesse autour du dit deuxième axe (27).

2. Mécanisme de changement de vitesse selon la revendication 1, **caractérisé en ce qu'**un membre de guidage (25) orienté parallèlement avec le premier axe de pivot (14) est attaché fermement au bras de pivot (12) à un endroit entre les dites parties de bouts, le dite membre de guidage étant prévu avec une rainure allongée (26a) ou ouverture, à travers laquelle la dite partie inférieure (8) du levier de changement de vitesse (2) passe, la dite rainure ou ouverture permettant le mouvement pivoté du levier de changement de vitesse autour d'une deuxième axe (27) sans mouvement du bras de pivot.

3. Mécanisme de changement de vitesse selon la revendication 2, **caractérisé en ce qu'**un surface de bout du bras (12) distancé du axe du bras de pivot forme un surface de came (18) avec trois creux (19, 20, 21) consécutifs, lui au milieu (20) représentant la position neutre du levier de changement de vitesse et les deux (19, 21) dans chaque côté des positions de vitesse.

4. Mécanisme de changement de vitesse selon la revendication 3, **caractérisé en ce qu'**un suiveur de came (22) est monté sur un bras de support (23) qui est pivotement logé dedans le dit support de montage (4), opposé à la dite surface de came (18) et coopère avec des moyens de ressort (24) pour influence du bras de support dans une direction vers la surface de came.

5. Mécanisme de changement de vitesse selon une des revendications 1 - 4, **caractérisé en ce que** la dite plaque de guidage (11) est attaché avec le dit support de montage (4) et une partie de bout (9) de la dite partie inférieur (8) du levier de changement de vitesse (2) saillis dedans la dite système de porte.
